# EUROPÄISCHE PATENTSCHRIFT

(11) **EP 2 473 086 B1**
(45) Veröffentlichungstag und Bekanntmachung des Hinweises auf die Patenterteilung: **06.01.2016**
(21) Anmeldenummer: 10745620.4
(22) Anmeldetag: 23.08.2010
(51) Int. Cl.: A47L 15/00, A47L 15/48

(54) **GESCHIRRSPÜLMASCHINE SOWIE VERFAHREN ZUM BETRIEB EINER GESCHIRRSPÜLMASCHINE**
DISHWASHER AND METHOD FOR OPERATING A DISHWASHER
LAVE-VAISSELLE ET PROCÉDÉ POUR FAIRE FONCTIONNER UN LAVE-VAISSELLE

(30) Priorität: 02.09.2009 DE 102009029115
(43) Veröffentlichungstag der Anmeldung: 11.07.2012
(73) Patentinhaber: BSH Hausgeräte GmbH, 81739 München (DE)
(72) Erfinder: HEISELE, Bernd, 89567 Sontheim (DE); JERG, Helmut, 89537 Giengen (DE); LUGERT, Michael, 89343 Jettingen-Scheppach (DE); ROSENBAUER, Michael, 86756 Reimlingen (DE); WAGNER, Franz-Josef, 86720 Nördlingen (DE)
(86) Internationale Anmeldenummer: PCT/EP2010/062231
(87) Internationale Veröffentlichungsnummer: WO 2011/026752

(56) Entgegenhaltungen:
- WO-A1-2005/053504
- WO-A2-2005/063110
- DE-A1-102007 059 517

## Beschreibung

Die Erfindung betrifft eine Geschirrspülmaschine gemäß dem Oberbegriff des Patentanspruches 1 sowie ein Verfahren zum Betrieb einer solchen Geschirrspülmaschine nach dem Patentanspruch 16.

Bei Geschirrspülmaschinen ist ein reduzierter Energie- und Zeitaufwand beim Spülgang bei gleichzeitig hoher Reinigungsgüte von wesentlicher Bedeutung.

So ist aus der DE 10 2005 004 089 A1 eine gattungsgemäße Geschirrspülmaschine bekannt, bei der im Spülgang anstelle einer Kondensationstrocknung mit Hilfe eines externen Trocknungssystems eine Lufttrocknung außerhalb des Spülraumes erfolgt. Als Trocknungseinrichtung ist eine Sorptionskolonne mit einem reversibel dehydrierbaren Material vorgesehen, das der zu trocknenden Luft eine Wassermenge entzieht und diese speichert. Die somit getrocknete Luft wird dann wieder in den Spülraum rückgeführt. Auf diese Weise kann ein im Vergleich zur Kondensationstrocknung zeitverkürzter Trocknungsschritt unter Einsparung von Energie erfolgen. Die Entfeuchtung des reversibel dehydrierbaren Materials einer derartigen Sorptionstrocknungseinrichtung erfolgt üblicherweise mittels einer zugeordneten elektrischen Heizungseinrichtung, insbesondere Luftheizung, in vorteilhafter Weise während wenigstens eines flüssigkeitsführenden Teilspülgangs eines gewählten Geschirrspülprogramms, so dass aufgeheizte Luft von der Sorptionstrocknungseinrichtung in den Spülraum der Geschirrspülmaschine geleitet werden und dort zur Erwärmung bzw. Aufheizung von Spülflottenflüssigkeit dienen kann, was energieeffizient ist. Mit der Bereitstellung des externen Trocknungssystems steigt allerdings der Bauteilaufwand für die Herstellung der Geschirrspülmaschine.

Aus der WO 2005/053504 A1 ist eine Geschirrspülmaschine mit einem Spülbehälter und Vorrichtungen zum Spülen von Geschirr mittels Spülflotte bekannt, welche einen mit dem Spülbehälter wärmeleitend verbundenen Behälter mit einem verdampfbaren und/oder sublimierbaren Medium und eine Sorptionskolonne mit reversibel dehydrierbarem Material aufweist. Dabei ist zwischen Behälter und Sorptionskolonne ein Gasaustausch möglich. Der Behälter und/oder die Sorptionskolonne werden einerseits mittelbar zur Trocknung des Geschirrs verwendet und andererseits wird die zur Desorption der Sorptionskolonne eingesetzte Wärmeenergie wenigstens teilweise zur Erwärmung der im Spülbehälter befindlichen Spülflotte und/oder des Geschirrs verwendet.

Aus der WO 2005/063110 A2 ist eine Geschirrspülmaschine mit einem Speicherbehälter für Spülflotte zur Speicherung und Wiederverwendung zu einem späteren Zeitpunkt zumindest eines Teils der in der Geschirrspülmaschine vorhandenen Spülflotte bekannt.

Der Erfindung liegt als Aufgabe zugrunde, eine Geschirrspülmaschine sowie ein Verfahren zum Betrieb einer Geschirrspülmaschine, insbesondere Haushaltsgeschirrspülmaschine, bereitzustellen, deren Energie und/oder Wasserbedarf weiter reduzierbar ist.

Die Aufgabe ist durch die Merkmale des Patentanspruches 1 oder des Patentanspruches 16 gelöst.

Gemäß dem kennzeichnenden Teil des Patentanspruches 1 weist die Geschirrspülmaschine zusätzlich einen Speicherbehälter auf, in dem während oder nach Ausführung eines Spülgangs Spülflüssigkeit zwischenspeicherbar ist. Auf diese Weise kann zum Beispiel nach Ausführung eines der Teilprogrammschritte, etwa einem Klarspülschritt, die nicht mehr benötigte Spülflüssigkeit in dem Speicherbehälter zwischengespeichert werden und in einem nachfolgenden Spülgang, etwa dem Vorspülschritt, wiederverwendet werden. Durch Verwendung des Speicherbehälters kann daher der Wasser- und/oder Energieaufwand während eines Spülganges reduziert werden.

Der Speicherbehälter ist, wie auch die Trocknungseinrichtung, strömungstechnisch mit dem vom Spülbehälter begrenzten Spülraum in Verbindung. Somit sind Spülbehälteröffnungen für das Absaugen der zu trocknenden Luft in die Trocknungseinrichtung sowie eine Spülbehälteröffnung zum Speicherbehälter erforderlich.

Die Ausbildung zweier voneinander separater Spülbehälteröffnungen ist fertigungstechnisch jedoch aufwendig. Außerdem ist jede der Öffnungen montagetechnisch aufwändig mit entsprechenden Flüssigkeitsdichtungen zu versehen. Erfindungsgemäß sind daher sowohl der Speicherbehälter als auch die Trocknungseinrichtung über eine gemeinsame Spülbehälteröffnung mit dem Spülraum strömungstechnisch verbunden. Eine weitere Spülbehälteröffnung kann somit eingespart werden. Dies reduziert insbesondere den Bauteileaufwand bei der Herstellung der Geschirrspülmaschine, d. h. deren Konstruktion ist vereinfacht. Die gemeinsame Spülbehälteröffnung ist daher in Doppelfunktion sowohl dem Speicherbehälter als auch der Trocknungseinrichtung zugeordnet.

Auf diese Weise kann beispielsweise während des Trocknungsschrittes die mit hoher Feuchtigkeit beladene Luft mittels eines Luftgebläses über die gemeinsame Spülbehälteröffnung in die Trocknungseinrichtung abgeführt werden.

Zusätzlich oder unabhängig hiervon kann in einem Desorptionsschritt während wenigstens eines flüssigkeitsführenden Teilspülgangs Luft aus dem Spülraum über die gemeinsame Spülbehälteröffnung in die Trocknungseinrichtung zum Entfeuchten deren Sorptionsmaterials geführt werden.

Zeitversetzt zum Trocknungsschritt kann, etwa in einem dem Trocknungsschritt vorgelagerten Klarspülschritt, der Speicherbehälter mit Spülflüssigkeit gefüllt werden beziehungsweise zur Durchführung des Vorspülschrittes entleert werden. Der beim Befüllen oder Entleeren des Speicherbehälters erforderliche Druckausgleich kann erfindungsgemäß über die gemeinsame Spülbehälteröffnung erfolgen.

Zusätzlich oder alternativ dazu kann zum Beispiel im Rahmen eines Spülganges eine Speicherbehälter-Reinigung durchgeführt werden, in der Spülflüssigkeit mit hoher Temperatur sowie großem Druck durch den Speicherbehälter gespült wird. Dadurch können insbesondere Fettablagerungen im Speicherbehälter thermisch aufgespaltet und aus den Speicherbehälter geführt werden. Die durch den Speicherbehälter gespülte Reinigungsflüssigkeit kann erfindungsgemäß über die gemeinsame Spülbehälteröffnung in den Spülraum abgeführt werden.

Zwischen der externen Trocknungseinrichtung und der gemeinsamen Spülbehälteröffnung kann ein Ansaugkanal geschaltet sein, über den die mit Feuchtigkeit beladene Luft zur Trocknungseinrichtung geführt wird. In dem Ansaugkanal kann, etwa an seiner stromabwärtigen Seite vor der Trocknungseinrichtung, ein Luftgebläse und/oder ein Heizelement vorgesehen sein, um einerseits die Luft aus dem Spülraum in die Trocknungseinrichtung zu führen und andererseits diese, insbesondere für einen Desorptionsvorgang, d. h. Entfeuchten deren reversibel dehydrierbaren Trocknungsmaterials wie z. B. Zeolith, zu erwärmen.

Wie oben erwähnt, wird während der Speicherbehälterreinigung Spülflüssigkeit durch den Speicherbehälter gespült, die über die gemeinsame Spülbehälteröffnung in den Spülraum eintritt. Dabei ist ein Flüssigkeitsübertritt in die Trocknungseinrichtung zu vermeiden, um insbesondere deren Sorptionsmaterial für einen Trocknungsschritt eines gewählten Geschirrspülprogramms funktionsfähig zu halten. Aus Sicherheitsgründen ist es daher von Vorteil, wenn der Ansaugkanal zweckmäßigerweise einen Kanalabschnitt aufweist, der ausgehend von der gemeinsamen Spülbehälteröffnung über eine vorgegebene Steighöhe nach oben geführt ist. Der Ansaugkanal kann außerdem insbesondere einen daran anschließenden zweiten Kanalabschnitt aufweisen, der gegenläufig zum ersten Kanalabschnitt nach unten geführt ist. Der über die Steighöhe nach oben geführte Kanalabschnitt stellt außerdem in vorteilhafter Weise eine Kondensationsstrecke bereit, entlang der beim Trocknen Feuchtigkeit kondensieren kann, die in flüssiger Phase in den Spülraum rückgeführt wird.

Ebenso kann es aus Sicherheitsgründen zweckmäßig sein, wenn der Speicherraum des Speicherbehälters nicht unmittelbar in die gemeinsame Spülbehälteröffnung einmündet. Bevorzugt kann daher der Speicherraum über einen Auslasskanal mit der gemeinsamen Spülbehälteröffnung verbunden sein.

Der Auslasskanal weist zweckmäßigerweise eine Einlassöffnung auf, die mit dem Speicherraum des Speicherbehälters, insbesondere mit der Überlauföffnung des Speicherbehälters, verbunden ist. Zur vollständigen Ausschöpfung der Speicherkapazität kann die Auslassöffnung des Speicherbehälters, die in den Einlassabschnitt des Auslasskanals über dessen Einlassöffnung mündet, insbesondere in einem oberen Scheitelbereich des Speicherbehälters angeordnet sein. Dadurch kann ein Füllstandspegel der im Speicherbehälter zu speichernden Flüssigkeit bis in diesen Scheitelbereich gelegt werden, ohne dass die zu speichernde Flüssigkeit über die Auslassöffnung und die gemeinsame Spülbehälteröffnung in den Spülraum abfließen kann.

In dem Reinigungsmodus kann somit die Spülflüssigkeit durch einen Flüssigkeitseinlass in den Speicherbehälter gepumpt und diese über die Auslassöffnung des Speicherbehälters sowie den daran angekoppelten, insbesondere angeformten, Auslasskanal und die gemeinsame Spülbehälteröffnung in den Spülbehälter rückgeführt werden.

Der Speicherbehälter und/oder der Ansaugkanal können nach einer vorteilhaften Weiterbildung der Erfindung in einfacher Weise als Kunststoffbauteile hergestellt sein, die wiederum im Kunststoffspritzgussverfahren gefertigt sein können. Beispielhaft kann der Speicherbehälter oder der Ansaugkanal zwei im Wesentlichen deckungsgleiche gegenüberliegende Seitenwände aufweisen. Die beiden gegenüberliegenden Seitenwände können über einen schmalen umlaufenden Randflansch flüssigkeitsdicht miteinander verbunden sein, etwa durch Verkleben oder Verschweißen.

Für eine raumsparende Anordnung können nach einer zweckmäßigen Weiterbildung der Erfindung sowohl der Speicherbehälter als auch der Ansaugkanal an einer Spülbehälter-Seitenwand angeordnet sein. Der Speicherbehälter kann außerdem zusammen mit dem Ansaugkanal insbesondere materialeinheitlich und/oder einstückig als ein einheitliches Kunststoffspritzgussteil gefertigt sein.

Für eine optimale Raumausnutzung an der äußeren Seitenwand des Spülbehälters können der Speicherbehälter und der Ansaugkanal vorzugsweise zueinander komplementär ausgebildet sein. Hierzu kann der Speicherbehälter insbesondere im Wesentlichen L-förmig gestaltet sein, und zwar mit einem, insbesondere bodenseitigen, in Bautiefenrichtung langgestreckten Behälterabschnitt und einem vertikal davon abragenden Behälterabschnitt, der sich bis zum oberen Rand der Spülbehälter-Seitenwand erstrecken kann.

Zwischen den beiden in L-Form angeordneten Behälterabschnitten ergibt sich in vorteilhafter Weise ein freier Bauraum, in dem Platz insbesondere für den Ansaugkanal vorhanden ist. Insbesondere kann dessen zur gemeinsamen Spülbehälteröffnung geführter Kanalabschnitt in den freien Bauraum zwischen den Behälterabschnitten verlaufen.

Die gemeinsame Spülbehälteröffnung kann dabei vorzugsweise an einem Inneneckbereich zwischen den beiden Behälterabschnitten des Speicherbehälters angeordnet sein. Auf diese Weise kann der Ansaugkanal mit seinem oben erwähnten, gegenläufigen zweiten Kanalabschnitt insbesondere an einer freien Stirnseite des horizontalen Behälterabschnittes vorbeigeführt werden und mit seinem ersten Behälterabschnitt zu der am Inneneckbereich gelegenen gemeinsamen Spülbehälteröffnung verlaufen.

Sonstige Aus- und Weiterbildungen der Erfindung sind in den Unteransprüchen wiedergegeben. Die vorstehend erläuterten und/oder die in den Unteransprüchen wiedergegebenen vorteilhaften Aus- sowie Weiterbildungen der Erfindung können dabei einzeln oder aber auch in beliebiger Kombination miteinander bei der erfindungsgemäßen Geschirrspülmaschine und dem erfindungsgemäßen Verfahren zur Anwendung kommen.

Die Erfindung, ihre Aus- sowie Weiterbildungen sowie deren Vorteile werden nachfolgend anhand von Zeichnungen erläutert.

Es zeigen:
- Fig. 1: in einem schematischen Blockdiagramm ein vorteilhaftes Ausführungsbeispiel einer erfindungsgemäß konstruierten Geschirrspülmaschine; und
- Fig. 2 bis 4: jeweils eine Seitenschnittdarstellung des Ansaugkanals der Trocknungseinrichtung sowie des Speicherbehälters der Geschirrspülmaschine von Figur 1 bei unterschiedlichen Betriebszuständen.

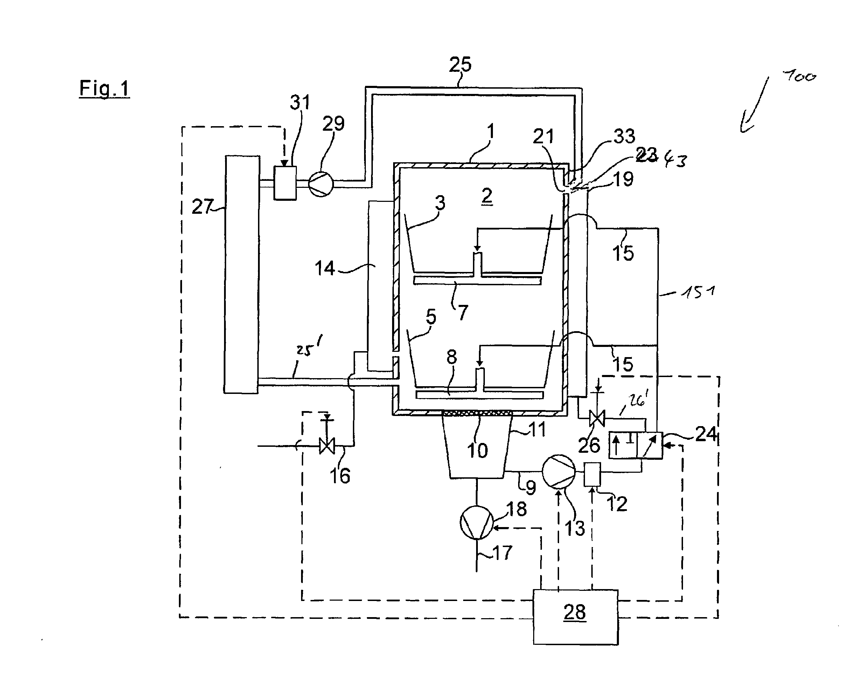

In der Fig. 1 ist schematisch eine Geschirrspülmaschine 100, insbesondere Haushaltsgeschirrspülmaschine, mit einem, einen Spülraum 2 begrenzenden Spülbehälter 1 gezeigt. Im Spülraum 2 des Spülbehälters 1 kann ein nicht dargestelltes, zu reinigendes Spülgut in Geschirrkörben 3, 5 angeordnet werden. Im gezeigten Spülbehälter 1 sind beispielhaft zwei, in unterschiedlichen Sprühebenen vorgesehene Sprühvorrichtungen 7, 8, insbesondere rotierende Sprüharme, angeordnet, über die das Spülgut mit Spülflüssigkeit beaufschlagt wird. Im Spülbehälterboden ist ein Pumpentopf 11 mit einer nur grob angedeuteten Siebanordnung 10 vorgesehen. Vom Pumpentopf 11 ist eine Umwälzleitung 9 mit darin angeordneter Umwälzpumpe 13 weggeführt. Die Umwälzleitung 9 ist über Zuleitungen 15 strömungstechnisch mit den Sprüharmen 7, 8 verbunden. Der Umwälzpumpe 13 nachgeschaltet ist ein, als Wasserheizung bezeichnetes Heizelement 12, etwa ein Durchlauferhitzer. Der Pumpentopf 11 ist außerdem über Anschlussstutzen mit einer Ablaufleitung 17 in Verbindung, in der eine Laugenpumpe 18 zum Abpumpen von Spülflüssigkeit aus dem Spülbehälter 1 angeordnet ist. Die Umwälzpumpe 13 ist hier im Ausführungsbeispiel über eine Wasserweiche 24, oder insbesondere ein 3-Wegeventil, mit der Einlassleitung 26' eines extern angeordneten Speicherbehälters 19 und mit ein oder mehreren Zulaufleitungen 151 für die ein oder mehreren Sprühvorrichtungen 7, 8 koppelbar. In der Einlassleitung 26' ist ein Sperrventil 26 eingefügt. Das Sperrventil 26 wird zum Befüllen des Speicherbehälters 19 mit Spülflottenflüssigkeit geöffnet und zum Zwischenspeichern von Flüssigkeit geschlossen. Zum Entleeren der zwischengespeicherten Spülflottenflüssigkeit in den Spülraum 2 des Spülbehälters 1 wird das Sperrventil 26 geöffnet, so dass die Spülflottenflüssigkeit allein unter Schwerkraftwirkung durch die Leitung 26' zurück in den Pumpentopf 11 zurückfließen kann.

Auf seiner gemäß der Fig. 1 linken Seite weist der Spülbehälter 1 einen Wassereinlaufbehälter 14 auf. Dieser ist über eine Spülbehälteröffnung in Verbindung mit dem Spülraum 2. Außerdem mündet eine mit einer, mit dem Wasserversorgungsnetz gekoppelten Frischwasser-Zuleitung 16 in den Wassereinlaufbehälter 14. Dem Wassereinlaufbehälter 14 ist eine nicht gezeigte Enthärtungsanlage vorgeschaltet.

Der Spülbehälter 1 weist an seiner, in der Fig. 1 rechten Seite, als Speicherbehälter 19 einen sogenannten Flottenspeicher auf. Dieser kann ggf. thermisch isoliert gegenüber der Seitenwand 33 des Spülbehälters 1 sein. In dem Flottenspeicher 19 kann Spülflüssigkeit zwischengespeichert werden, die nach Ausführung eines Teilprogrammabschnittes eines Spülganges nicht mehr benötigt wird und in einem Spülgang eines späteren gestarteten Geschirrspülprogramms für ein Spülbad teilweise oder ganz verwendet werden kann. Der Flottenspeicher 19 ist in seinem oberen Bereich über eine Auslassöffnung 43, insbesondere Überlauföffnung, die in eine Spülbehälteröffnung 21 mündet, strömungstechnisch in Verbindung mit dem Spülraum 2.

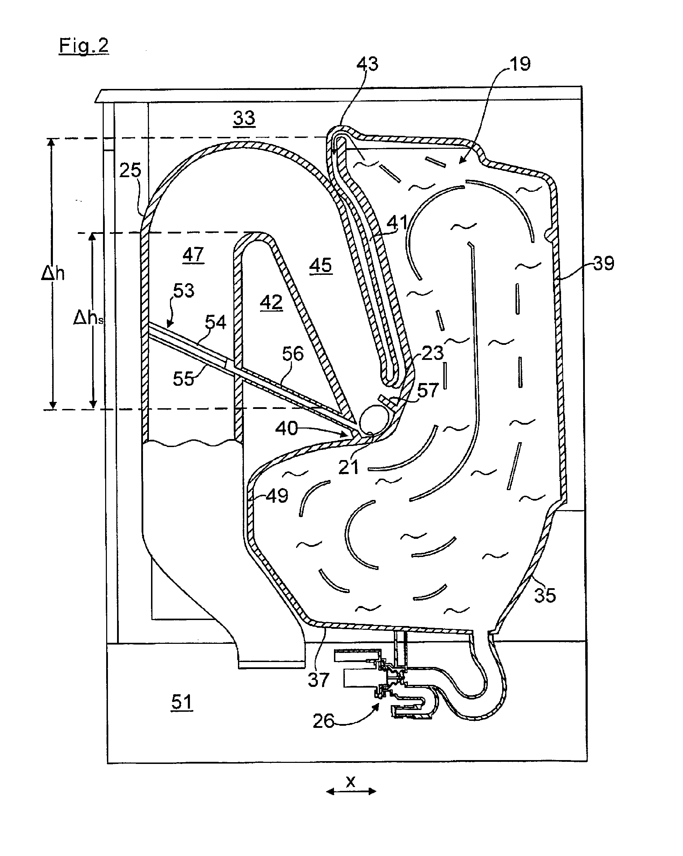

Der Speicherbehälter 19 weist hier im Ausführungsbeispiel von Figur 1 an seiner Oberseite also eine Auslassöffnung 43 auf, die in die Spülbehälteröffnung 21 mündet. Dazu führt von der Auslassöffnung 43 ein Auslasskanal 41 zur Spülbehälteröffnung 21. Der zeichnerischen Übersichtlichkeit halber ist dieser Auslasskanal 41 in der Figur 1 weggelassen worden. Er ist in den Figuren 2 mit 4 im Detail dargestellt. Selbstverständlich kann es nach einer alternativen Ausführungsvariante auch zweckmäßig sein, den Auslasskanal 41 ggf. wegzulassen. Dann ist die Auslassöffnung 43 des Speicherbehälters 19 zweckmäßigerweise im Ortsbereich der gemeinsamen Spülbehälteröffnung 21 vorgesehen. Diese ist gleichzeitig mit dem Ansaugkanal 25 einer als Sorptionskolonne ausgeführten Trocknungseinrichtung 27 verbunden. In dem Ansaugkanal 25 zur Trocknungseinrichtung 27 ist ein Luftgebläse 29 sowie ein Heizelement 31 geschaltet. Die Trocknungseinrichtung 27 enthält als Trocknungsmittel ein reversibel dehydrierbares Material, z.B. Zeolith, mit dem in einem Trocknungsschritt Luft getrocknet wird. Hierzu wird ein mit hoher Feuchtigkeit beladener Luftstrom mittels des Luftgebläses 29 über die gemeinsame Spülbehältertüröffnung 21 aus dem Spülraum 2 des Spülbehälters 1 angesaugt und über den Ansaugkanal 25 in die Trocknungseinrichtung 27 geleitet. Das in der Trocknungseinrichtung 27 vorgesehene Sorptionsmaterial wie z.B. Zeolith nimmt Feuchtigkeit der Luft auf und die vergleichsweise trockene Luft wird in der Sorptionstrockungseinrichtung 27 über einen ausgangsseitigen Luftführungskanal 25' wieder in den Spülbehälter 1 zurückgeführt. Die im Trocknungsschritt im Zeolith gespeicherte Wassermenge kann in einem hier nicht näher betrachteten Regenerationsvorgang bzw. Desorptionsvorgang wieder freigegeben werden.

Wie aus der Fig. 2 hervorgeht, sind sowohl der Ansaugkanal 25 als auch der Speicherbehälter 19 außenseitig an der Seitenwand 33 des Spülbehälters 1 vorgesehen. Demzufolge sind sowohl der Ansaugkanal 25 als auch der Speicherbehälter 19 in Anlage mit der Spülbehälter-Seitenwand 33. Der Ansaugkanal 25 und der Speicherbehälter 19 sind als eine Baugruppe aus Kunststoffmaterial einstückig im Kunststoffspritzgussverfahren hergestellt. Beide weisen jeweils deckungsgleiche Seitenwände auf, von denen in der Fig. 2 nur die in Anlage mit der Spülbehälter-Seitenwand 33 befindliche Seitenwand gezeigt ist. Der Ansaugkanal 25 und der Speicherbehälter 19 weisen außerdem einen umlaufenden Randflansch 35 auf, der beispielhaft in Schweißverbindung mit der nicht dargestellten gegenüberliegenden Seitenwand sein kann.

Wie aus der Fig. 2 weiter hervorgeht, nimmt die Bauteilgruppe bestehend aus Ansaugkanal 25 und Speicherbehälter 19 im Wesentlichen die gesamte Fläche der Spülbehälter-Seitenwand 33 ein. Für eine raumausnutzende Anordnung sind der Speicherbehälter 19 und der Ansaugkanal 33 zueinander komplementär ausgebildet. So ist der Speicherbehälter 19 im Wesentlichen L-förmig gestaltet, und zwar mit einem bodenseitigen, in Bautiefenrichtung x (bzgl. des Spülraums 2) langgestreckten Behälterabschnitt 37 und einem vertikal davon abragenden Behälterabschnitt 39, der sich bis zur Oberseite der Geschirrspülmaschine erstreckt.

Im Inneneckbereich 40 zwischen den beiden Behälterabschnitten 37 und 39 ist die gemeinsame Spülbehälteröffnung 21 angeordnet. Die gemeinsame Spülbehälteröffnung 21 ist über einen im Wesentlichen vertikal hochgezogenen, im oder am Speicherbehälter 19 vorgesehen, insbesondere integrierten Auslasskanal 41 verbunden, der über einen eingangsseitigen Einlassabschnitt mit der Auslassöffnung 43 des Speicherbehälters 19 verbunden ist. Diese ist insbesondere als Überlauföffnung ausgebildet. Über sie mündet der Speicherraum des Speicherbehälters 19 in den Auslasskanal 41. Die Auslassöffnung 43 ist gemäß der Fig. 2 insbesondere an einem oberen Scheitel des Speicherbehälters 19 als Überlauföffnung vorgesehen und über eine Höhendifferenz Δh oberhalb der gemeinsamen Spülbehälteröffnung 21 angeordnet.

Ausgehend von der gemeinsamen Spülbehälteröffnung 21 erstreckt sich ein erster lufteinlassseitiger Kanalabschnitt 45 des Ansaugkanals 25 über eine Steighöhe Δh_{S} schräg nach oben vorne, wodurch eine schräg nach oben ansteigende Kondensationsstrecke vorgesehen wird. Daran anschließend wird der Ansaugkanal 25 mit einem zweiten Kanalabschnitt 47 gegenläufig zum ersten Kanalabschnitt 45 vertikal nach unten geführt.

Für eine möglichst gedrängte, kompakte Anordnung des Ansaugkanals 25 und des Speicherbehälters 19 sind diese komplementär zueinander ausgebildet. So begrenzen die beiden Behälterabschnitte 37, 39 einen Bauraum 42, in dem der Kanalabschnitt 45 des Ansaugkanals 25 verläuft. Der vertikal nach unten geführte zweite Kanalabschnitt 47 des Ansaugkanals 25 ist außerdem in der Bautiefenrichtung x frontseitig vor einer Stirnseite 49 des unteren Behälterabschnittes 37 des Speicherbehälters 19 vorbei bis in einen unterhalb des Spülbehälters 1 vorgesehenen Montageraum 51 geführt, in dem die Trocknungseinrichtung 27 zusammen mit dem Heizelement 21 und dem Luftgebläse 29 angeordnet sind.

Wie aus der Fig. 2 weiter hervorgeht, ist im zweiten Kanalabschnitt 47 des Ansaugkanals 25 ein Flüssigkeitstropfenabscheider 53 vorgesehen, der schräggestellte Ablaufrippen 54, 55 aufweist. Mit den Ablaufrippen 54, 55 werden an der Innenwandung des Kanalabschnittes 47 kondensierte Flüssigkeitstropfen aufgefangen und über einen Rückführkanal 56 wieder in den Kanalabschnitt 45 geleitet. Von dort können die Flüssigkeitstropfen über die gemeinsame Spülbehälteröffnung 21 in den Spülraum 2 geleitet werden. Insbesondere mündet der Rückführkanal 56 hier im Ausführungsbeispiel direkt in die gemeinsame Spülbehälteröffnung 21.

Gemäß der Fig. 2 ist der Ansaugkanal 25 mit seinem ersten Kanalabschnitt 45 einstückig mit dem Inneneckbereich des Speicherbehälters 19 verbunden. Der erste Kanalabschnitt 45 steht dabei mit der Auslassöffnung 23 am unteren Bereich des Auslasskanals 41 in Verbindung.

Nachfolgend werden der Aufbau und die Funktionsweise der aus Ansaugkanal 25 und Speicherbehälter 19 bestehenden Baugruppe mit der gemeinsamen Spülbehälteröffnung 21 anhand unterschiedlicher Betriebszustände der Geschirrspülmaschine beschrieben.

So ist in der Fig. 2 der Speicherbehälter 19 mit zwischengespeicherter Spülflüssigkeit gezeigt. Die Füllstandshöhe ist dabei durch eine Unterkante der Auslassöffnung 43 begrenzt. Das Befüllen des Speicherbehälters 19 kann während eines Spülganges bei und/oder nach erfolgtem Klarspülschritt durchgeführt werden. Hierzu wird die bei und/oder nach der Beendigung des Klarspülschrittes nicht mehr benötigte Klarspülflüssigkeit nicht mittels der Laugenpumpe 18 der Geschirrspülmaschine 100 abgepumpt, sondern mittels deren Umwälzpumpe 13 über die Wasserweiche 24 sowie über das freigeschaltete Sperrventil 26 in der Zuleitung 26' in den Speicherbehälter 19 hochgepumpt. Anschließend wird das Sperrventil 26 wieder geschlossen. Das Befüllen des Speicherbehälters 19 erfolgt dabei unter einem Druckausgleich, der über die Auslassöffnung 43, den Auslasskanal 41 sowie die gemeinsame Spülbehälteröffnung 21 stattfindet.

Ebenso erfolgt während der Entleerung des Speicherbehälters 19 ein Druckausgleich. Zur Entleerung des Speicherbehälters 19 wird das Sperrventil 26 in der Zuleitung 26' geöffnet sowie der Strömungsweg zum Pumpentopf 11 freigeschaltet. Die zwischengespeicherte Spülflüssigkeit kann somit unter Schwerkraftwirkung in den Pumpentopf 11 rückströmen und zur Durchführung eines Vorspülschrittes verwendet werden.

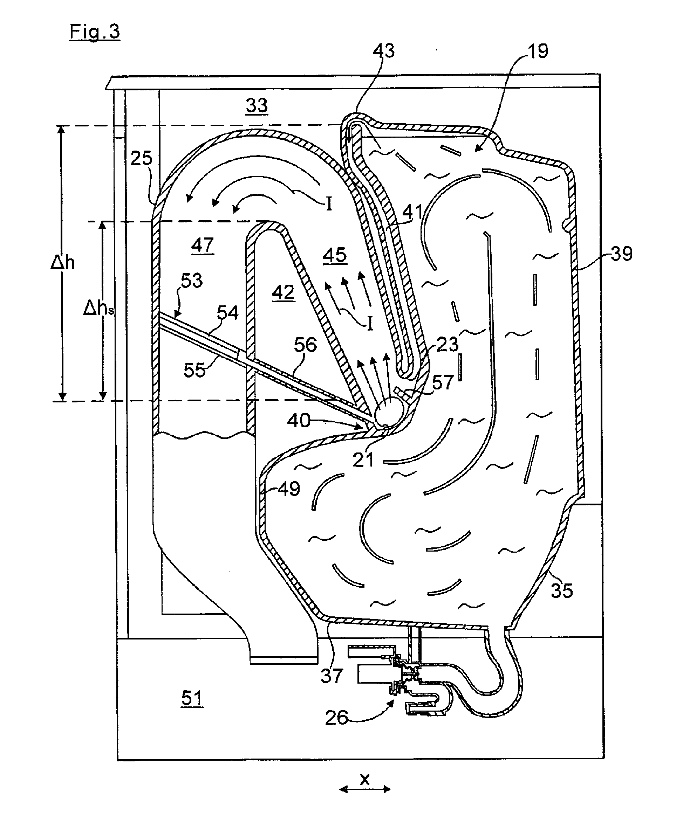

Gemäß der Fig. 3 ist der Luftstrom I gezeigt, der während eines Trocknungsschrittes am Ende des Spülganges aus dem Spülraum 2 gesaugt wird. Der mit hoher Feuchtigkeit beladene Luftstrom I wird mittels des Luftgebläses 29 aus dem Spülraum 2 durch die Spülbehälteröffnung 21 und dem daran angeschlossenen Ansaugkanal 25 zur Sorptionskolonne 27 geführt, in der dem Luftstrom I die Feuchtigkeit entzogen wird. Da gleichzeitig die entfeuchtete Luft wieder in den Spülraum 2 rückgeführt wird, erfolgt der Luftkreislauf während des Trocknungsschrittes ohne größere Druckschwankungen in etwa bei Normaldruck, so dass kein Ansaugen von im Speicherbehälter 19 zwischengespeicherter Spülflüssigkeit zu befürchten ist.

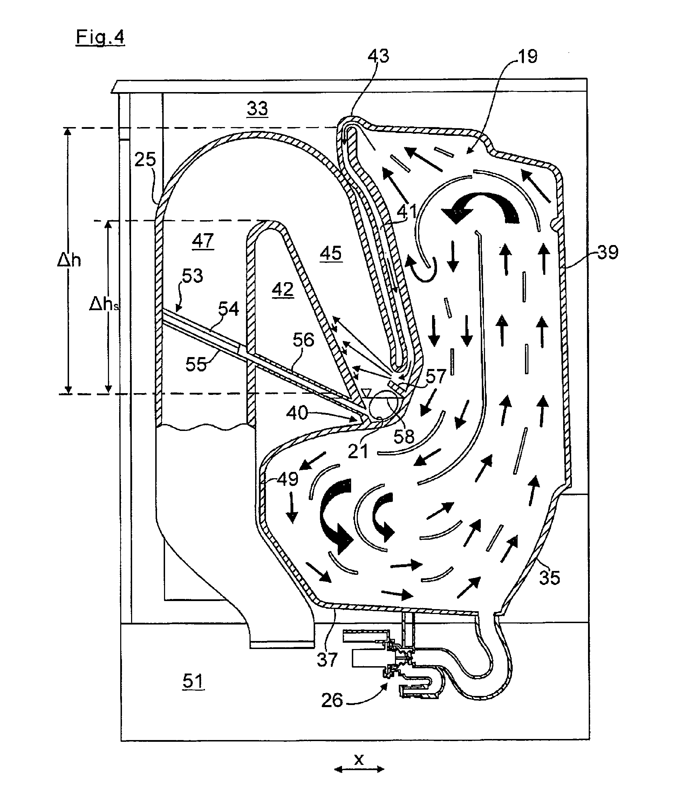

In der Fig. 4 ist der Reinigungsmodus veranschaulicht, um den Speicherraum des Speicherbehälters 19 zu reinigen. Zur Durchführung der Speicherbehälter-Reinigung wird die Spülflüssigkeit von der Umwälzpumpe 13 mit großer Strömungsgeschwindigkeit in den Speicherbehälter 19 über die Zuleitung 26' bei geöffneten Sperrventil 26 gepumpt. Diese durchströmt den Speicherbehälter 19 nach Art einer Ringströmung. Die Spülflüssigkeit wird über die obere Auslassöffnung 43 und den daran angeschlossenen Auslasskanal 41 zur gemeinsamen Spülbehälteröffnung 21 geführt, über die die Spülflüssigkeit wieder in den Spülraum 2 eingeleitet werden kann. Auf diese Weise kann die Spülflüssigkeit zwischen dem Spülraum 2 und dem Speicherbehälter 19 in einem geschlossenen Umwälzkreislauf zirkulieren. Gleichzeitig wird in dem Umwälzkreislauf die Spülflüssigkeit auf Temperaturen in der Größenordnung von 70°C aufgeheizt, wodurch Schmutzpartikel innerhalb des Speicherbehälters 19 gelöst und ausgetragen werden können.

Während des Reinigungsmodus ist es von großer Bedeutung, dass die über die insbesondere als Überlauföffnung ausgebildete Auslassöffnung 43 und über den daran anschließenden Auslasskanal 41 aus dem Speicherbehälter 19 abgeführte Flüssigkeitsströmung nicht über den Rückführkanal 56 in den Kanalabschnitt 47 gelangen kann und von dort zur Trocknungseinrichtung 27 abfließt. Um dies zu vermeiden, ist stromab des Auslasskanals 41 im Zusammenführungsbereich der gemeinsamen Spülbehälteröffnung 21 eine Umlenkrippe 57 vorgesehen, mit der die Flüssigkeitsströmung auf die Innenwandung des Ansaugkanals 25 oberhalb der Rückführkanal-Öffnung gerichtet ist und nicht unmittelbar in den Rückführkanal 56 einströmen kann. Auf diese Weise stellt sich im Reinigungsmodus ein Füllstand 58 im unteren Bodenbereich des Auslasskanals 41 ein, bei dem der Rückführkanal 56 nur in geringem Maße mit Spülflüssigkeit gefüllt ist.

### Bezugszeichenliste

- 1: Spülbehälter
- 2: Spülraum
- 3, 5: Geschirrkörbe
- 7, 8: Sprühvorrichtungen
- 9: Umwälzleitung
- 10: Siebanordnung
- 11: Pumpentopf
- 12: Heizelement
- 13: Umwälzpumpe
- 14: Wassereinlaufbehälter
- 15: Zuleitungen
- 16: Frischwasser-Zuleitung
- 17: Ablaufleitung
- 18: Laugenpumpe
- 19: Flottenspeicher
- 21: gemeinsame Spülbehälteröffnung
- 23: Auslassöffnung
- 24: Drei-Wege-Schaltventil
- 25: Ansaugkanal
- 25': Luftführungskanal'
- 26: Sperrventil
- 26': Zuführleitung
- 27: Trocknungseinrichtung
- 28: Steuereinrichtung
- 29: Luftgebläse
- 31: Heizelement
- 33: Spülbehälterseitenwand
- 35: umlaufender Rand
- 37: horizontaler Behälterabschnitt
- 39: vertikaler Behälterabschnitt
- 40: Inneneckbereich
- 41: Auslasskanal
- 42: Bauraum
- 43: Auslassöffnung
- 45: erster Kanalabschnitt des Ansaugkanals 25
- 47: zweiter Kanalabschnitt des Ansaugkanals 25
- 51: Montageraum
- 53: Tropfenabscheider
- 54, 55: Ablaufrippen
- 56: Rückführkanal
- 57: Umlenkrippe
- 58: Füllstand
- Δh_{S}: Steighöhe
- Δh: Höhendifferenz
- x: Bautiefenrichtung
- l: Luft
- 100: Geschirrspülmaschine
- 151: Zulaufleitungen

## Patentansprüche

1. Geschirrspülmaschine (100), insbesondere Haushaltsgeschirrspülmaschine, mit einer außerhalb eines Spülbehälters (1) vorgesehenen Trocknungseinrichtung (27), die strömungstechnisch mit dem vom Spülbehälter (1) begrenzten Spülraum (2) verbunden ist und die zur Trocknung von mit Feuchtigkeit beladener Luft (I) vom Spülraum (2) einsetzbar ist, **dadurch gekennzeichnet, dass** die Geschirrspülmaschine einen Speicherbehälter (19) aufweist, in dem Spülflüssigkeit zwischenspeicherbar ist und sowohl der Speicherbehälter (19) als auch die Trocknungseinrichtung (27) über eine gemeinsame Spülbehälteröffnung (21) mit dem Spülraum (2) strömungstechnisch verbunden sind, wobei der Speicherbehälter (19) in seinem oberen Bereich über eine Auslassöffnung (43), insbesondere Überlauföffnung, die in die Spülbehälteröffnung (21) mündet, strömungstechnisch in Verbindung mit dem Spülraum (2) ist.

2. Geschirrspülmaschine nach Anspruch 1, **dadurch gekennzeichnet, dass** in einem Trocknungsschritt während eines Spülgangs die mit Feuchtigkeit beladene Luft (I) über die gemeinsame Spülbehälteröffnung (21), insbesondere mittels eines Luftgebläses (29), in die Trocknungseinrichtung (27) führbar ist, dass beim Befüllen oder Entleeren des Speicherbehälters (19) mit Spülflüssigkeit ein Druckausgleich über die gemeinsame Spülbehälteröffnung (21) erfolgt, und/oder dass die Reinigung des Speicherbehälters (19) unter Durchspülung des Speicherbehälters (19) mit einer Spülflüssigkeit erfolgt, wobei die durch den Speicherbehälter (19) gespülte Spülflüssigkeit über die gemeinsame Spülbehälteröffnung (21) in den Spülraum (2) führbar ist.

3. Geschirrspülmaschine nach einem der vorhergehenden Ansprüche, **dadurch gekennzeichnet, dass** zwischen der Trocknungseinrichtung (27) und der gemeinsamen Spülbehälteröffnung (21) ein Ansaugkanal (25) geschaltet ist, über den die mit Feuchtigkeit beladene Luft (I) zur Trocknungseinrichtung (27) führbar ist.

4. Geschirrspülmaschine nach Anspruch 3, **dadurch gekennzeichnet, dass** der Ansaugkanal (25) einen Kanalabschnitt (45) aufweist, der ausgehend von der gemeinsamen Spülbehälteröffnung (21) über eine Steighöhe (Δh_{S}) nach oben geführt ist.

5. Geschirrspülmaschine nach einem der Ansprüche 3 oder 4, **dadurch gekennzeichnet, dass** der Ansaugkanal (25) einen zweiten Kanalabschnitt (47) aufweist, der an den ersten Kanalabschnitt (45) anschließt und gegenläufig zum ersten Kanalabschnitt (45) nach unten geführt ist.

6. Geschirrspülmaschine nach einem der vorhergehenden Ansprüche, **dadurch gekennzeichnet, dass** ein Speicherraum des Speicherbehälters (19) über einen Auslasskanal (41) mit der gemeinsamen Spülbehälteröffnung (21) verbunden ist.

7. Geschirrspülmaschine nach Anspruch 6, **dadurch gekennzeichnet, dass** der Auslasskanal (41) eine Eingangsöffnung (43) aufweist, die, insbesondere als Überlauföffnung, mit dem Speicherraum des Speicherbehälters (19) verbunden ist, und die über eine Höhendifferenz (Δh) oberhalb der gemeinsamen Spülbehälteröffnung (21) angeordnet ist.

8. Geschirrspülmaschine nach einem der Ansprüche 6 oder 7, **dadurch gekennzeichnet, dass** der Auslasskanal (41) und der Speicherbehälter (19) als eine Baueinheit materialeinheitlich und/oder einstückig ausgebildet sind, insbesondere als ein Kunststoffspritzgussteil.

9. Geschirrspülmaschine nach einem der Ansprüche 3 bis 5, **dadurch gekennzeichnet, dass** der Speicherbehälter (19) zusammen mit dem Ansaugkanal (25) an einer Spülbehälter-Seitenwand (33) angeordnet ist.

10. Geschirrspülmaschine nach einem der Ansprüche 3 bis 5 oder 9, **dadurch gekennzeichnet, dass** der Speicherbehälter (19) und/oder der Ansaugkanal (25) zwei im Wesentlichen deckungsgleiche Seitenwände aufweisen, die über umlaufende Ränder (35) flüssigkeitsdicht miteinander verbunden sind.

11. Geschirrspülmaschine nach einem der Ansprüche 3 bis 5, 9 oder 10, **dadurch gekennzeichnet, dass** der Speicherbehälter (19) und der Ansaugkanal (25) zueinander komplementär ausgebildet sind.

12. Geschirrspülmaschine nach einem der vorhergehenden Ansprüche, **dadurch gekennzeichnet, dass** der Speicherbehälter (19) im Wesentlichen L-förmig mit einem insbesondere bodenseitigen, in Bautiefenrichtung (x) langgestreckten Behälterabschnitt (37) und einen vertikal davon abragenden Behälterabschnitt (39) gestaltet ist.

13. Geschirrspülmaschine nach Anspruch 12, **dadurch gekennzeichnet, dass** die beiden Behälterabschnitte (37, 39) außerhalb des L-förmigen Speicherbehälters (19) einen Bauraum (42) begrenzen, in dem der Ansaugkanal (25), insbesondere dessen zur gemeinsamen Spülbehälteröffnung (21) geführter Kanalabschnitt (45), verläuft.

14. Geschirrspülmaschine nach Anspruch 12 oder 13, **dadurch gekennzeichnet, dass** die gemeinsame Spülbehälteröffnung (21) an einem Inneneckbereich (40) zwischen den beiden Behälterabschnitten (37, 39) des Speicherbehälters (1) angeordnet ist.

15. Geschirrspülmaschine nach einem der Ansprüche 12, 13 oder 14, **dadurch gekennzeichnet, dass** der Ansaugkanal (25), insbesondere dessen gegenläufiger Kanalabschnitt (47), an einer Stirnseite (49) des horizontalen Behälterabschnittes (37) vorbeigeführt ist, und insbesondere in einen Montageraum (51) unterhalb des Spülbehälters (1) geführt ist.

16. Verfahren zum Betrieb einer Geschirrspülmaschine, nach einem der vorhergehende Ansprüche, bei dem in einem Trocknungsschritt während eines Spülgangs die mit Feuchtigkeit beladene Luft (I) über die gemeinsame Spülbehälteröffnung (21) in die Trocknungseinrichtung (27) geführt wird, bei dem in einem Desorptionsschritt während wenigstens eines Teilspülgangs die Luft (I) aus dem Spülraum (2) über die gemeinsame Spülbehälteröffnung (21) in die Trocknungseinrichtung (27) zum Entfeuchten deren Sorptionsmaterials geführt wird, bei dem beim Befüllen oder Entleeren des Speicherbehälters (1) ein Druckausgleich über die gemeinsame Spülbehälteröffnung (21) erfolgt, und/oder bei dem bei einer Speicherbehälter-Reinigung Spülflüssigkeit über die gemeinsame Spülbehälteröffnung (21) in den Spülraum (2) geleitet wird.

## Claims

1. Dishwasher (100), in particular domestic dishwasher having a drying facility (27) provided outside of a rinsing container (1) and fluidically connected to the rinsing chamber (2) bounded by the rinsing container (1) and that can be used for drying air (I) charged with high humidity from the rinsing chamber (2), **characterised in that** the dishwasher has a storage tank (19) in which rinsing fluid can be intermediately stored and both the storage tank (19) and also the drying facility (27) are fluidically connected to the rinsing chamber (2) by way of a common rinsing container opening (21), wherein the storage tank (19) is fluidically connected to the rinsing chamber (2) in its upper region by way of an input opening (43), in particular overflow opening, which opens into the rinsing container opening (21).

2. Dishwasher according to claim 1, **characterised in that** in a drying step during a wash cycle, the air (I) charged with humidity can be routed into the drying facility (27) by way of the common rinsing container opening (21) in particular by means of a fan (29), that when filling or emptying the storage tank (19) with rinsing fluid, a pressure equalisation takes place by way of the common rinsing container opening (21) and/or that the cleaning of the storage tank (21) takes place by rinsing the storage tank (19) with a rinsing fluid, whereby the rinsing fluid rinsed through the storage tank (19) can be routed into the rinsing chamber (2) by way of the common rinsing container opening (21).

3. Dishwasher according to one of the preceding claims, **characterised in that** an intake duct (25) is connected between the drying facility (27) and the common rinsing container opening (21), by way of which the air (I) charged with humidity can be routed to the drying facility (27).

4. Dishwasher according to claim 3, **characterised in that** the intake duct (25) has a duct segment (45), which is routed upwards starting from the common rinsing container opening (21) above a head (Δh*ₛ*).

5. Dishwasher according to one of claims 3 or 4, **characterised in that** the intake duct (25) has a second duct segment (47) which connects to the first duct segment (45) and is routed downwards in an opposite direction to the first duct segment (45).

6. Dishwasher according to one of the preceding claims, **characterised in that** a storage chamber of the storage tank (19) is connected to the common rinsing container opening (21) by way of an outlet duct (41).

7. Dishwasher according to claim 6, **characterised in that** the outlet duct (44) has an input opening (43), which, in particular as an overflow opening, is connected to the storage chamber of the storage tank (19), and which is arranged above the common rinsing container opening (21) above a height difference (Δh).

8. Dishwasher according to one of claims 6 or 7, **characterised in that** the outlet duct (41) and the storage tank (19) are embodied as a structural unit composed of a single material and/or embodied in one piece, in particular as a plastic injection-moulded part.

9. Dishwasher according to one of claims 3 to 5, **characterised in that** the storage tank (19) is arranged on a rinsing container side wall (33) together with the intake duct (25).

10. Dishwasher according to one of claims 3 to 5 or 9, **characterised in that** the storage tank (19) and/or the intake duct (25) have two essentially congruent side walls, which are fluidically connected to one another by way of peripheral edges (35).

11. Dishwasher according to one of claims 3 to 5, 9 or 10, **characterised in that** the storage tank (19) and the intake duct (25) are embodied so as to complement one another.

12. Dishwasher according to one of the preceding claims, **characterised in that** the storage tank (19) is configured essentially L-shaped with an in particular floor-facing container segment (37) extended in the depth direction (x) and a container segment (39) protruding vertically therefrom.

13. Dishwasher according to claim 12, **characterised in that** the two container segments (37, 39) delimit an installation space (42) outside of the L-shaped storage tank (19), in which the intake duct (25), in particular its duct segment (45) routed to the common rinsing container opening (21) runs.

14. Dishwasher according to claim 12 or 13, **characterised in that** the common rinsing container opening (21) is arranged on an inner corner region (40) between the two container segments (37, 39) of the storage tank (1).

15. Dishwasher according to one of claims 12, 13, or 14, **characterised in that** the intake duct (25), in particular its opposite duct segment (47) is routed past a front face (49) of the horizontal container segment (37) and is in particular routed into an assembly space (51) below the rinsing container (1).

16. Method for operating a dishwasher according to one of the preceding claims, in which, in a drying step during a wash cycle, the air (I) charged with humidity is routed into the drying facility (27) by way of the common rinsing container opening (21), in which, in an desorption step during at least one partial wash cycle, the air (I) is routed out of the rinsing chamber (2) via the common rinsing container opening (21) into the drying facility (27) for dehumidifying its sorption material, in which, when filling or emptying the storage tank (1), a pressure equalisation takes place by way of the common rinsing container opening (21), and/or in which, during storage tank cleaning, rinsing fluid is routed via the common rinsing container opening (21) into the rinsing chamber (2).

## Revendications

1. Lave-vaisselle (100), en particulier lave-vaisselle ménager, avec un dispositif de séchage (27) situé en dehors d'une cuve de lavage (1), en connexion fluidique avec l'espace de lavage (2) délimité par la cuve de lavage (1) et utilisable afin de sécher de l'air chargé en humidité (I) de l'espace de lavage (2), **caractérisé en ce que** le lave-vaisselle présente un réservoir (19) dans lequel du liquide de lavage peut être stocké temporairement et tant le réservoir (19) que le dispositif de séchage (27) est en connexion fluidique avec l'espace de lavage (2) via un orifice de cuve de lavage commun (21), dans lequel le réservoir (19) est en connexion fluidique avec l'espace de lavage (2) dans sa zone supérieure via un orifice de sortie (43), en particulier un orifice de trop-plein qui débouche dans l'orifice de cuve de lavage (21).

2. Lave-vaisselle selon la revendication 1, **caractérisé en ce que** lors d'une étape de séchage durant un rinçage l'air chargé en humidité (I) peut être mené dans le dispositif de séchage (27) via l'orifice de cuve de lavage commun (21), en particulier au moyen d'un ventilateur (29), **en ce que** lors du remplissage ou de la vidange du réservoir (19) en liquide de lavage une compensation de pression s'opère via l'orifice de cuve de lavage commun (21), et/ou **en ce que** le nettoyage du réservoir (19) par le rinçage du réservoir (19) s'opère avec un liquide de lavage, dans lequel le liquide de lavage qui rince le réservoir (19) peut être mené dans l'espace de lavage (2) via l'orifice de cuve de lavage commun (21).

3. Lave-vaisselle selon l'une des revendications précédentes, **caractérisé en ce qu**'un canal d'aspiration (25) est inséré entre le dispositif de séchage (27) et l'orifice de cuve de lavage commun (21), via lequel l'air chargé en humidité (I) peut être mené vers le dispositif de séchage (27).

4. Lave-vaisselle selon la revendication 3, **caractérisé en ce que** le canal d'aspiration (25) présente une section de canal (45) qui, au départ de l'orifice de cuve de lavage commun (21) mène vers le dessus via une hauteur de remontée (Δhₛ).

5. Lave-vaisselle selon l'une des revendications 3 ou 4, **caractérisé en ce que** le canal d'aspiration (25) présente une deuxième section de canal (47) raccordée à la première section de canal (45) et qui, à l'opposé de la première section de canal (45) mène vers le dessous.

6. Lave-vaisselle selon l'une des revendications précédentes, **caractérisé en ce qu**'un espace de stockage du réservoir (19) est relié à l'orifice de cuve de lavage commun (21) via un canal de sortie (41).

7. Lave-vaisselle selon la revendication 6, **caractérisé en ce que** le canal de sortie (41) présente un orifice d'entrée (43) relié en particulier sous forme d'orifice de trop-plein à l'espace de stockage du réservoir (19) et disposé selon une différence de hauteur (Δh) au-dessus de l'orifice de cuve de lavage commun (21).

8. Lave-vaisselle selon l'une des revendications 6 ou 7, **caractérisé en ce que** le canal de sortie (41) et le réservoir (19) sont exécutés sous la forme d'un module en ce qui concerne le matériel et/ou en une pièce, en particulier sous la forme d'une pièce en plastique moulée par injection.

9. Lave-vaisselle selon l'une des revendications 3 à 5, **caractérisé en ce que** le réservoir (19) est disposé ensemble avec le canal d'aspiration (25) sur une paroi latérale de la cuve de lavage (33).

10. Lave-vaisselle selon l'une des revendications 3 à 5 ou 9, **caractérisé en ce que** le réservoir (19) et/ou le canal d'aspiration (25) présentent deux parois latérales essentiellement congruentes reliées les unes aux autres de manière étanche aux liquides via des bords périphériques (35).

11. Lave-vaisselle selon l'une des revendications 3 à 5, 9 ou 10, **caractérisé en ce que** le réservoir (19) et le canal d'aspiration (25) sont exécutés de manière complémentaire l'un par rapport à l'autre.

12. Lave-vaisselle selon l'une des revendications précédentes, **caractérisé en ce que** le réservoir (19) est essentiellement formé en forme de L avec une section de réservoir (37) allongée en particulier côté sol dans le sens de la profondeur (x) et une section de réservoir (39) verticale faisant saillie par rapport à la première.

13. Lave-vaisselle selon la revendication 12, **caractérisé en ce que** les deux sections de réservoir (37, 39) délimitent en dehors du réservoir en forme de L (19) un espace de montage (42) dans lequel le canal d'aspiration (25), en particulier sa section de canal (45) menant à l'orifice de cuve de lavage commun (21) s'étend.

14. Lave-vaisselle selon la revendication 12 ou 13, **caractérisé en ce que** l'orifice de cuve de lavage commun (21) est disposé dans une zone angulaire intérieure (40) entre les deux sections de réservoir (37, 39) du réservoir (1).

15. Lave-vaisselle selon l'une des revendications 12, 13 ou 14, **caractérisé en ce que** le canal d'aspiration (25), en particulier sa section de canal opposée (47) passe devant un côté frontal (49) de la section de réservoir horizontale (37), et en particulier dans un espace de montage (51) en dessous de la cuve de lavage (1).

16. Procédé d'exploitation d'un lave-vaisselle selon l'une des revendications précédentes, dans lequel lors d'une étape de séchage durant un rinçage l'air chargé en humidité (I) peut être mené dans le dispositif de séchage (27) via l'orifice de cuve de lavage commun (21), dans lequel lors d'une étape de désorption durant au moins un rinçage partiel l'air (I) est mené de l'espace de lavage (2) via l'orifice de cuve de lavage commun (21) dans le dispositif de séchage (27) afin de déshumidifier son matériau de sorption, dans lequel lors du remplissage ou de la vidange du réservoir (1) une compensation de pression s'opère via l'orifice de cuve de lavage commun (21), et/ou dans lequel lors d'un nettoyage du réservoir du liquide de lavage est mené dans l'espace de lavage (2) via l'orifice de cuve de lavage commun (21).
